# EUROPEAN PATENT APPLICATION

(11) **EP 4 317 052 A1**
(43) Date of publication of application: **07.02.2024**
(21) Application number: 22775176.5
(22) Date of filing: 11.03.2022
(51) Int. Cl.: B82B 3/00, C09K 11/08, C09K 11/65, B82Y 40/00

(54) **METHOD FOR PRODUCING CARBON QUANTUM DOTS**

(30) Priority: 24.03.2021 JP 2021050399
(71) Applicant: Kureha Corporation, Chuo-ku Tokyo 103-8552 (JP)
(72) Inventor: TAKAHASHI, Yuka, Tokyo 103-8552 (JP); ISHIZU, Masaki, Tokyo 103-8552 (JP); SAKABE, Hiroshi, Tokyo 103-8552 (JP); KATSURAO, Takumi, Tokyo 103-8552 (JP)
(74) Representative: Zimmermann & Partner Patentanwälte mbB
(86) International application number: PCT/JP2022/010758
(87) International publication number: WO 2022/202384

(57) **Abstract**

Provided is a method for producing solid-state carbon quantum dots having high emission quantum yield through simple processes. To solve the above issue, a method for producing carbon quantum dots is a method for producing the carbon quantum dots which are solid at 25°C under 1 atm, the method including: preparing a mixture by mixing an organic compound and a boron compound, the organic compound having a reactive group and not containing a boron atom; and preparing carbon quantum dots by heating the mixture with substantially no solvent at 100°C or higher and 300°C or lower. An amount of a nitrogen atom in the organic compound is 20 mass% or greater, and an amount of the boron compound with respect to a total amount of the organic compound and the boron compound is 20 mass% or greater.

## Description

### TECHNICAL FIELD

The present invention relates to a method for producing carbon quantum dots that are solid at 25°C under 1 atm.

### BACKGROUND ART

Carbon quantum dots are stable carbon-based microparticles having particle sizes of approximately a few nanometers to a several tens of nanometers and exhibit good fluorescence properties, and thus are expected to be used as photonics materials, such as those of solar cells, displays, security inks. In addition, carbon quantum dots have low toxicity and high biocompatibility and thus are also expected to be applied to medical fields, such as biosensor and imaging.

To apply carbon quantum dots in various fields, further improvement of the functionality of carbon quantum dots has been demanded, and for example, carbon quantum dots in which a carbon quantum dot is doped with a boron atom is developed. Patent Document 1 describes a method for obtaining a white luminous body with a high quantum yield (maximum emission wavelength is from 410 nm to 440 nm) by heating potassium hydrogen phthalate, sodium azide, and boric acid in the presence of formaldehyde. Patent Document 2 describes a method for obtaining carbon quantum dots (maximum emission wavelength is approximately 420 nm) by dissolving a precursor containing a nitrogen atom and a boron atom in water, filtering the mixture after hydrothermal synthesis, and drying.

### Citation List

### Patent Literature

Patent Document 1: CN 108795423 A
Patent Document 2: CN 105602557 A

### SUMMARY OF INVENTION

### TECHNICAL PROBLEM

However, similarly to Patent Document 1 and Patent Document 2 described above, in a case where solid-state carbon quantum dots are prepared by a solvothermal method or a hydrothermal synthesis method, for example, a filtering step or a drying step needs to be performed after carbon quantum dots are prepared in the presence of a solvent. Such a method has issues, in that the production process becomes complicated and input energy and time are required. In addition, the method also has issues for the carbon quantum dots tend to aggregate at the time of removal of a solvent and quenching tends to occur.

The present invention has been made in view of the above issues. An object of the present invention is to provide a method for producing solid-state carbon quantum dots having high emission quantum yield through simple processes.

### SOLUTION TO PROBLEM

The present invention provides a method for producing carbon quantum dots described below.
A method for producing carbon quantum dots, the carbon quantum dots being solid at 25°C under 1 atm, the method including: preparing a mixture by mixing an organic compound and a boron compound, the organic compound having a reactive group and not containing a boron atom; and preparing carbon quantum dots by heating the mixture with substantially no solvent at 100°C or higher and 300°C or lower, in which an amount of a nitrogen atom in the organic compound is 20 mass% or greater; and an amount of the boron compound with respect to a total amount of the organic compound and the boron compound is 20 mass% or greater.

### ADVANTAGEOUS EFFECTS OF INVENTION

According to the method for producing carbon quantum dots of an embodiment of the present invention, a filtering step or a drying step does not have to be performed after the preparation of carbon quantum dots. Thus, carbon quantum dots having high emission quantum yield can be obtained through simple processes.

### BRIEF DESCRIPTION OF THE DRAWINGS

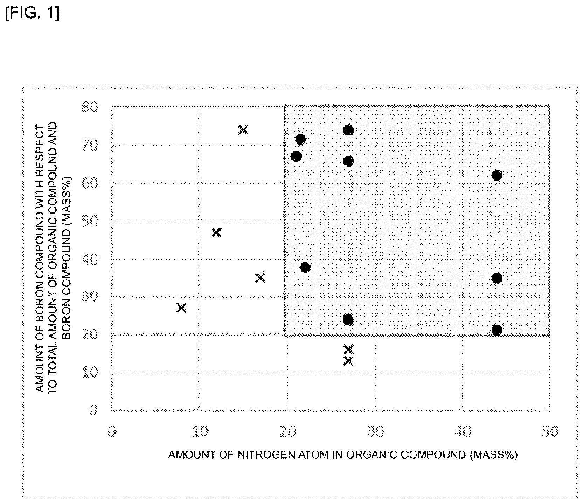

FIG. 1 is a graph indicating the relationship of an amount of nitrogen atoms in an organic compound used in each method for producing carbon quantum dots of Examples 1 to 10 and Comparative Examples 9 to 14, an amount of a boron compound with respect to a total amount of the organic compound and the boron compound, and emission quantum yield.

### DESCRIPTION OF EMBODIMENTS

In the present specification, numerical ranges indicated by "to" refer to numerical ranges including the numerical values described before and after "to".

The method for producing carbon quantum dots according to an embodiment of the present invention is a method for producing carbon quantum dots that are solid at 25°C under 1 atm. As mentioned above, methods for preparing carbon quantum dots in a solvent have been known. However, when carbon quantum dots are prepared in a solvent, there are issues, such as production process being complicated and input energy and time being required. Furthermore, when the carbon quantum dots are separated from the solvent, carbon quantum dots tend to aggregate, and quenching may occur. Furthermore, even if the carbon quantum dots are not separated from the solvent, the emission quantum yield of the carbon quantum dots tends to be low.

Meanwhile, in the method for producing carbon quantum dots according to an embodiment of the present invention, a mixture is prepared by mixing an organic compound, which has a reactive group and does not contain a boron atom, and a boron compound (hereinafter, also referred to as "mixture preparation"). At this time, the amount of nitrogen atoms in the organic compound is 20 mass% or greater, and the amount of the boron compound with respect to the total amount of the organic compound and the boron compound is 20 mass% or greater. Then, carbon quantum dots are prepared by heating the mixture with substantially no solvent (hereinafter, also referred to as "carbon quantum dot preparation").

As described above, when a reaction is performed by mixing the organic compound containing not less than a certain amount of nitrogen atoms and not less than a certain amount of the boron compound in a condition substantially free of solvent, carbon quantum dots having significantly high emission quantum yield can be obtained through simple processes. The reason for increase of the emission quantum yield is uncertain but is presumed as follows.

When the organic compound, which is a main raw material of the carbon quantum dots, contains not less than a certain amount of nitrogen atoms, nitrogen atoms are incorporated into the backbones of the resulting carbon quantum dots. It is conceived that the carbon quantum dots partially containing nitrogen atoms tend to receive energy from outside compared to carbon quantum dots only made of carbon atoms. Furthermore, if the boron compound coexists with the organic compound at the time of preparation of the carbon quantum dots, boron atoms or functional groups containing boron atoms are uniformly arranged on surfaces of the carbon quantum dots. It is conceived that, by the interaction between the boron having a vacant p-orbital and the nitrogen having an electron pair, electron withdrawing and electron donating are promoted in main backbones of carbon quantum dots, and the emission quantum yield increases. Furthermore, in this method, a relatively large amount of boron compound is contained with respect to the amount of the organic compound. Thus, one cause of the increase of emission quantum yield is thought to be the fact that the prepared carbon quantum dots are incorporated into crystals of excess boron compounds, and thus aggregation of the carbon quantum dots is suppressed.

In addition, when carbon quantum dots are prepared in a solvent, carbon quantum dots tend to aggregate at the time of removal of the solvent, and quenching or the like may occur. Meanwhile, the method described above does not require a step of removing the solvent, the carbon quantum dots are less likely to aggregate, and the quenching is less likely to occur. Furthermore, it is conceived that, when carbon quantum dots are prepared by heating with substantially no solvent, reaction sites of the condensation reaction to produce the carbon quantum dots are limited to contact points between the organic compound and the boron compound in a solid state, the type of carbon quantum dots to be produced and the particle size are limited, and thus high emission quantum yield is achieved.

Note that, when the carbon quantum dots are prepared by heating with substantially no solvent, in addition to the production processes being simplified, heating time required to prepare carbon quantum dots can be shortened, and input energy amount can be also reduced, which are advantageous. Furthermore, when the temperature at this time is set to 100°C or higher and 300°C or lower, the resulting carbon quantum dots tend to contain elemental hydrogen, and the carbon quantum dots tend to dissolve in water or a polar solvent. Each step of the method according to an embodiment of the present invention will be described below.

### • Mixture Preparation

In the mixture preparation, a mixture is prepared by mixing an organic compound, which contains a reactive group and does not contain a boron atom, and a boron compound. In the present specification, the "reactive group" is a group bonding to a carbon atom in the organic compound, is a group for causing polycondensation reaction or the like of the organic compounds in the heating described below, and is a group contributing to the formation of a main backbone of the carbon quantum dots. Specific examples of a reactive group include a carboxy group, a hydroxy group, an epoxy group, an amide group, a sulfo group, and an amino group. These functional groups may remain on a surface of a resulting carbon quantum dot. Furthermore, in the present specification, a compound containing a boron atom is referred to as a boron compound. Even when a molecule contains a reactive group, if the molecule contains a boron atom, the molecule is taken as a boron compound.

Note that the mixture prepared in the present step may contain other compounds besides the organic compound and the boron compound as long as the object and effect of the present invention are not impaired. For example, an organic compound having no reactive group, an inorganic compound, a layered clay mineral, and the like may be further contained. However, the total amount of the organic compound and the boron compound is preferably 50 mass% or greater, and more preferably 70 mass% or greater, with respect to the total amount of the mixture. When the total amount of the organic compound and the boron compound is 50 mass% or greater, the carbon quantum dots can be prepared efficiently.

The organic compound contained in the mixture is only required to be a compound having a reactive group, being capable of producing carbon quantum dots by carbonization (condensation reaction), and containing 20 mass% or greater of nitrogen atoms with respect to the total amount of the organic compound. The amount of nitrogen atoms is preferably 20 mass% or greater and 75 mass% or less, and more preferably 25 mass% or greater and 70 mass% or less. When the amount of nitrogen atoms in the organic compound is 20 mass% or greater, the nitrogen atoms tend to be contained in the main backbone of the resulting carbon quantum dot, and emission quantum yield increases as described above.

The organic compound may contain only one compound or two or more compounds may be included. Specifically, the organic compound may contain only a compound containing a nitrogen atom and a reactive group (hereinafter, also referred to as "nitrogen-containing organic compound") or may be a mixture of a compound containing no nitrogen atom and containing a reactive group (hereinafter, also referred to as "nitrogen-free organic compound") and a nitrogen-containing organic compound.

Examples of nitrogen-containing organic compound include an amine compound, nitrogen-containing saccharides, imidazoles, triazines, triazoles, triazenes, guanidines, and oximes. The organic compound may contain only one of these, or two or more of these. Furthermore, these compounds may be in a solid or liquid state at normal temperature.

Examples of an amine compound include 1,2-phenylenediamine, 1,3-phenylenediamine, 1,4-phenylenediamine, 2,6-diaminopyridine, urea, thiourea, ammonium thiocyanate, ethanolamine, 1-amino-2-propanol, melamine, cyanuric acid, barbituric acid, folic acid, ethylenediamine, diethylenetriamine, triethylenetetramine, polyethyleneimine, dicyandiamide, guanidine, aminoguanidine, formamide, glutamic acid, aspartic acid, cysteine, arginine, histidine, lysine, glutathione, RNA, DNA, cysteamine, methionine, homocysteine, taurine, thiamine, N-[3-(trimethoxysilyl)propyl]ethylenediamine, and 4,5-difluoro-1,2-phenylenediamine, sulfanilic acid, o-phosphoserine, adenosine 5'-triphosphate, guanidine phosphate, guanylurea phosphate, and 3-aminopropyltriethoxysilane.

Examples of a nitrogen-containing saccharide include glucosamine, chitin, and chitosan. Examples of an imidazole include 1-(trimethylsilyl)imidazole. Examples of triazines include 1,2,4-triazine. Examples of triazoles include 1,3,5-triazine, 1,2,3-triazole, and 1,2,4-triazole. Examples of triazenes include 1,3-diphenyltriazene and 1-methyl-3-p-tolyltriazene. Examples of guanidines include guanidine and arginine. Examples of oximes include benzamidoxime and p-benzoquinone dioxime.

Among these, a nitrogen-containing organic compound is preferably an amine compound from the perspectives of availability and reactivity in the heating described below.

Meanwhile, examples of a nitrogen-free organic compound include a carboxylic acid, an alcohol, phenols, and saccharides. The organic compound may contain only one of these, or two or more of these. Furthermore, these compounds may be in a solid or liquid state at normal temperature.

A carboxylic acid is any compound having one or more carboxy groups in the molecule (however, except those corresponding to nitrogen-containing organic compounds, phenols, or saccharides). Examples of a carboxylic acid include a monocarboxylic acid, such as formic acid, acetic acid, 3-mercaptopropionic acid, and α-lipoic acid; a polyvalent carboxylic acid that is divalent or higher, such as oxalic acid, malonic acid, succinic acid, maleic acid, fumaric acid, itaconic acid, polyacrylic acid, (ethylenedithio)diacetic acid, thiomalic acid, tetrafluoroterephthalic acid, and 2-phosphonobutane-1,2,4-tricarboxylic acid; and a hydroxy acid, such as citric acid, glycolic acid, lactic acid, tartaric acid, malic acid, and 5-sulfosalicylic acid.

The alcohol is preferably a monohydric alcohol having one hydroxy group and 6 or more carbons, or a polyhydric alcohol having two or more hydroxy groups (however, except those corresponding to nitrogen-containing organic compounds, carboxylic acids, phenols, or saccharides). Examples of a monohydric alcohol having 6 or more carbons include a higher alcohol such as hexanol or octanol. Meanwhile, examples of polyhydric alcohols include ethylene glycol, glycerol, erythritol, pentaerythritol, ascorbic acid, polyethylene glycol, and sorbitol.

Phenols are any compound having a structure in which a hydroxy group is bonded to a benzene ring (however, except nitrogen-containing organic compound). Examples of phenols include phenol, catechol, resorcinol, hydroquinone, phloroglucinol, pyrogallol, 1,2,4-trihydroxybenzene, gallic acid, tannin, lignin, catechin, anthocyanin, rutin, chlorogenic acid, lignan, and curcumin.

Examples of saccharides as a nitrogen-free organic compound include glucose, sucrose, and cellulose.

The nitrogen-free organic compound preferably contains a reactive group that efficiently proceed a condensation reaction with the nitrogen-containing organic compound, and is preferably a carboxylic acid, an alcohol, or phenols. The amount of the nitrogen-free organic compound in the organic compound is appropriately selected in a manner that the amount of nitrogen atoms in the organic compound becomes 20 mass% or greater.

The total amount of the organic compound (the nitrogen-containing organic compound and the nitrogen-free organic compound) is only required to be 80 mass% or less, and is preferably 20 mass% or greater and 80 mass% or less, with respect to the total amount of the organic compound and the boron compound. When the amount of the organic compound with respect to the total amount of the organic compound and the boron compound is 80 mass% or less, an adequately high emission quantum yield can be achieved.

The boron compound is only required to be a compound containing a boron atom and may be, for example, elemental boron or a compound containing boron. The mixture prepared in this step may contain only one or two or more of the boron compounds.

Specific examples of a boron compound include boron, boric acid, sodium tetraborate, boric oxide, trimethyl borate, triethyl borate, trioctadecyl borate, triphenyl borate, 2-ethoxy-4,4,5,5-tetramethyl-1,3,2-dioxaborolane, triethanolamine borate, 2,4,6-trimethoxyboroxine, tris(trimethylsilyl) borate, tris(2-cyanoethyl) borate, 3-aminophenylboronic acid, 2-anthratheneboronic acid, 9-anthratheneboronic acid, phenylboronic acid, 3,5-bis(trifluoromethyl)phenylboronic acid, 4,4'-biphenyldiboronic acid, 2-bromophenylboronic acid, 4-bromo-1-naphthaleneboronic acid, 3-bromo-2-fluorophenylboronic acid, 4-carboxyphenylboronic acid, 3-cyanophenylboronic acid, 4-cyano-3-fluorophenylboronic acid, 3,5-difluorophenylboronic acid, 4-(diphenylamino)phenylboronic acid, 3-fluorophenylboronic acid, 3-hydroxyphenylboronic acid, 4-mercaptophenylboronic acid, 1-naphthaleneboronic acid, 9-phenanthreneboronic acid, 1,4-phenylenediboronic acid, 1-pyreneboronic acid, 2-aminopyrimidine-5-boronic acid, 2-bromopyridine-3-boronic acid, 2-fluoropyridine-3-boronic acid, 4-pyridylboronic acid, quinoline-8-boronic acid, 4-aminophenylboronic acid pinacol, 3-hydroxyphenylboronic acid pinacol, 4-(4,4,5,5-tetramethyl-1,3,2-dioxaborolan-2-yl)pyridine, diboronic acid, sodium borohydride, sodium tetrafluoroborate, 1-ethyl-3-methylimidazolium tetrafluoroborate, boron trifluoride, and boron tribromide.

Note that the amount of boron atoms in the boron compound is preferably 3 mass% or greater, and more preferably 5 mass% or greater, with respect to the total amount of the boron compound. When the amount of boron atoms in the boron compound is in the range described above, the boron atoms can be arranged on a surface of the carbon quantum dot, and the emission quantum yield tends to increase.

The total amount of the boron compound is only required to be 20 mass% or greater, and is preferably 21 mass% or greater and 75 mass% or less, with respect to the total amount of the organic compound and the boron compound. When the amount of the boron compound with respect to the total amount of the organic compound and the boron compound is 20 mass% or greater, an adequately high emission quantum yield tends to be achieved as described above.

Furthermore, the mixture may further contain a compound containing a phosphorus atom, a sulfur atom, a silicon atom, a fluorine atom, or the like and containing no reactive group (hereinafter, also referred to as "other compound"). When the mixture contains such other compound, carbon quantum dots containing a heteroatom besides nitrogen and boron can be obtained. The mixture may contain only one or two or more of such other compounds.

Examples of a compound containing a phosphorus atom include elemental phosphorus, phosphoric acid, phosphorus oxide, 1-hydroxyethane-1,1-diphosphonic acid, phytic acid, ammonium phosphate, diammonium hydrogen phosphate, ammonium dihydrogen phosphate, o-phosphorylethanolamine, phosphorus chloride, phosphorus bromide, triethyl phosphonoacetate, tetrakis(hydroxymethyl)phosphonium chloride, methyl phosphate, triethyl phosphite, nitrilotris(methylenephosphonic acid), and N,N,N',N'-ethylenediaminetetrakis(methylenephosphonic acid).

Examples of a compound containing a sulfur atom include sulfur, sodium thiosulfate, sodium sulfide, sodium sulfate, sulfuric acid, methane sulfonic acid, p-toluenesulfonic acid, and sodium hydrosulfide.

Examples of a compound containing a silicon atom include tetrachlorosilane and tetraethoxysilane.

Examples of a compound containing a fluorine atom include 2,2,3,3,4,4-hexafluoro-1 ,5-pentanediol diglycidyl ether and sodium fluoride.

The amount of such other compound in the mixture is appropriately selected based on the amount of the desired heteroatom and, typically, is preferably from 0 mass% to 20 mass%, and more preferably from 3 mass% to 10 mass%, with respect to the total amount of the mixture. When the amount of such other compound is 3 mass% or greater, addition effect of such another compound tends to be achieved. Meanwhile, when the amount of such other compound is 10 mass% or less, the amounts of the organic compound and the boron compound are relatively adequately increased, and thus the carbon quantum dots can be prepared more efficiently.

The mixture prepared in this step may further contain a layered clay mineral. Examples of a layered clay mineral include a smectite, a layered double hydroxide, a kaolinite, and a mica. Preferred among these is a smectite or a layered double hydroxide in terms of having an average interlayer spacing appropriate for forming the carbon quantum dots.

The smectite is a clay mineral that swells with water or the like, and examples include saponite, montmorillonite, hectorite, beidellite, nontronite, sauconite, and stevensite.

Meanwhile, the layered double hydroxide is a double hydroxide obtained by forming a solid solution of a divalent metal oxide and a trivalent metal ion, and examples thereof include hydrotalcite, hydrocalumite, hydromagnesite, and pyroaurite.

To adjust the average interlayer spacing of the layered clay mineral, the layered clay mineral may be swelled with a solvent. Examples of a solvent include water, methanol, ethanol, hexane, toluene, chloroform, dimethylformamide, and dimethyl sulfoxide. However, in the heating described below, heating is performed with substantially no solvent. Thus, the amount of the solvent is preferably small, and the boiling point of the solvent is preferably lower than the temperature at which the organic compound and the like are carbonized in the heating (hereinafter, also referred to as "heating temperature"). In other words, the amount and the type of solvent are preferably adjusted in a manner that substantially all the solvent is volatilized before the temperature of the mixture reaches the heating temperature in the heating described below.

Note that the amount of the layered clay mineral in the mixture is preferably from 0 mass% to 20 mass%, and more preferably from 0 mass% to 10 mass%, with respect to the total amount of the mixture, and even more preferably, substantially no layered clay mineral is contained. Note that substantially not contained means 5 mass% or less with respect to the total amount of the mixture. Note that the amount of the layered clay mineral is more preferably 3 mass% or less, and even more preferably 1 mass% or less, with respect to the total amount of the mixture, and the layered clay mineral is particularly preferably not contained at all. When the amount of the layered clay mineral is 20 mass% or less, the amounts of the organic compound and the boron compound are relatively adequately large, and thus the carbon quantum dots can be prepared more efficiently.

The mixing method of the mixture is not particularly limited as long as the method can uniformly mix the organic compound, the boron compound, and optionally another compound and the layered clay mineral. For example, mixing may be performed while grinding is performed in a mortar, or mixing may be performed while crushing is performed by a ball mill or the like. Furthermore, in a case where the organic compound or the boron compound or another compound is a liquid, mixing may be performed by dissolving, blending, or dispersing a solid component in a liquid component. Alternatively, mixing may be performed by dissolving, blending, or dispersing each material in a small amount of a solvent. In this case, the amount and the type of the solvent are adjusted in a manner that heating in the heating described below can be performed with substantially no solvent. Specifically, the amount and the type of the solvent are preferably adjusted in a manner that substantially all the solvent is volatilized before the temperature of the mixture reaches the heating temperature. Note that, in the present specification, a solvent means a compound that is liquid under 1 atm at 25°C and that does not correspond to the organic compound and the boron compound described above.

### • Heating step

In the heating step, the mixture adjusted in the mixture preparation described above is heated with substantially no solvent. In the present specification, "with substantially no solvent" means an amount of a solvent in the mixture being 5 mass% or less with respect to the total amount of the mixture at the time when a temperature reaches the temperature for carbonizing the organic compound and the like (heating temperature). The amount of the solvent in the mixture at the heating temperature is preferably 2 mass% or less, and even more preferably 0 mass%. Thus, as described above, as long as the solvent can be adequately volatilized before the heating temperature is reached, the mixture may contain a solvent at the start of the heating. Note that compounds that are raw materials of the carbon quantum dots, such as the organic compound and the boron compound, may be liquid at the heating temperature.

The heating method of the mixture is only required to be a method that can produce the carbon quantum dots by carbonizing the organic compound and the like, and examples thereof include heating by a heater and irradiation of electromagnetic wave.

In a case where the mixture is heated by a heater or the like, the heating temperature is preferably 70°C or higher and 700°C or lower, more preferably 100°C or higher and 500°C or lower, even more preferably 100°C or higher and 300°C or lower, yet even more preferably 120°C or higher and 300°C or lower, and yet even more preferably 120°C or higher and 200°C or lower. When the heating temperature is preferably 300°C or lower, and more preferably 200°C or lower, a hydrogen content of the resulting carbon quantum dots is maintained high. Furthermore, the retention time at the heating temperature is preferably 0.01 hours or longer and 45 hours or less, more preferably 0.1 hours or longer and 30 hours or less, and even more preferably 0.5 hours or longer and 10 hours or less. The particle size of the resulting carbon quantum dot and the emission wavelength can be adjusted by the heating time. Furthermore, here, heating may be performed in a non-oxidizing atmosphere while an inert gas such as nitrogen is circulated.

In the case where irradiation with an electromagnetic wave (e.g., microwave) is performed, the wattage is preferably 1 W or greater and 1500 W or less, and more preferably 1 W or greater to 1000 W or less. Furthermore, the heating time by the electromagnetic wave (e.g., microwave) is preferably 0.01 hours or longer and 10 hours or less, more preferably 0.01 hours or longer and 5 hours or less, and even more preferably 0.01 hours or longer and 1 hour or less. The particle size of the resulting carbon quantum dot and the emission wavelength can be adjusted by the irradiation time of the electromagnetic wave.

The electromagnetic wave irradiation can be performed by, for example, a semiconductor type electromagnetic wave radiation device. The irradiation with the electromagnetic wave is preferably performed while the temperature of the mixture is checked. The irradiation of the electromagnetic wave is preferably performed while the heating temperature is adjusted to 70°C or higher and 700°C or lower, more preferably 100°C or higher and 300°C or lower, even more preferably 120°C or higher and 300°C or lower, and yet even more preferably 120°C or higher and 200°C or lower. When the heating temperature is preferably 300°C or lower, and more preferably 200°C or lower, a hydrogen content of the resulting carbon quantum dot is maintained high.

By this step of heating, the carbon quantum dots are obtained. Note that unreacted boron compound and the like may remain around the carbon quantum dots. Thus, to isolate the carbon quantum dots, for example, the obtained component may be washed with an organic solvent or the like to purify the component by removal of unreacted materials or by-products.

Note that the resulting carbon quantum dots are solid under 1 atm at 25°C. The average particle size measured by observing the carbon quantum dots by using an atomic force microscope (AFM) is preferably 1 nm or greater and 100 nm or less, and more preferably 1 nm or greater and 80 nm or less. When the average particle size of the carbon quantum dots is in this range, characteristics as quantum dots tend to be adequately achieved. Note that the average particle size of the carbon quantum dots is preferably determined by measuring 3 or more carbon quantum dots and determining the average value of these.

Furthermore, the carbon quantum dots preferably emit visible light or near-infrared light when a light of a wavelength of 250 nm or higher and 1000 nm or lower is irradiated. The maximum emission wavelength at this time is preferably 440 nm or higher and 700 nm or lower, more preferably 450 nm or higher and 680 nm or lower, and particularly preferably 460 nm or higher and 680 nm or lower. When the maximum emission wavelength is in this range, the carbon quantum dots according to an embodiment of the present invention can be used for various applications.

Furthermore, the emission quantum yield of the carbon quantum dots is preferably 30% or greater, more preferably 40% or greater, and even more preferably 50% or greater. When the emission quantum yield is in this range, the carbon quantum dots can be used for various applications.

Furthermore, when the carbon quantum dot has a content of elemental hydrogen of preferably 2.0 mass% or greater, and more preferably 2.1 mass% or greater, the carbon quantum dot can be dissolved in a polar solvent, such as water. The reason why the carbon quantum dot becomes soluble in a polar solvent when the content of elemental hydrogen is not less than the predetermined amount is not clear; however, it is conceived that elemental hydrogen contained in the carbon quantum dot is in a form of a hydroxy group or a carboxy group, and because of this, the carbon quantum dot has solubility. The amount of elemental hydrogen is identified by organic elemental analysis performed by the CHN mode of the elemental analyzer PE 2400 Series II (available from PerkinElmer Japan).

### • Applications

The carbon quantum dots obtained by the production method described above have excellent emission properties. Thus, the carbon quantum dots can be used in various applications. The application of the carbon quantum dots is not particularly limited and can be used for, for example, solar batteries, displays, security inks, quantum dot lasers, biomarkers, lighting materials, thermoelectric materials, photocatalysts, and separating agents for a specific substance, based on the performance of the carbon quantum dots.

Note that the carbon quantum dots described above are solid at 25°C under 1 atm but may be used in various applications in a state of solution where the carbon quantum dots are dispersed in a solvent or the like.

### EXAMPLES

Hereinafter, specific examples of the present invention will be described together with comparative examples, but the present invention is not limited to these.

### [Example 1]

### (1) Preparation of carbon quantum dots

Organic compounds (0.03 g of citric acid and 0.02 g of dicyandiamide) and 0.144 g of a boron compound (boric acid) were mixed while being ground in a mortar, and thus a mixture was prepared. The powder mixture was placed in a screw-top test tube with an internal volume of 15 mL, and the screw-top test tube was sealed with a screw cap with a rubber packing. The screw-top test tube was then heated at 170°C for 1.5 hours while nitrogen was circulated in the screw-top test tube, and solid-state carbon quantum dots were synthesized. Note that the amount of nitrogen atoms in the organic compound and the amount of the boron compound with respect to the total amount of the organic compound and the boron compound are indicated in Table 1.

### (2) Evaluation of solid-state emission properties

The obtained carbon quantum dot was sandwiched in KBr plates and pressed, and a measurement sample was prepared. The emission wavelength (fluorescence wavelength) and emission quantum yield of the measurement sample in a solid state were evaluated using a spectrofluorometer FP-8500 (available from JASCO Corporation) equipped with an integrating sphere unit ILF-835. Light with a wavelength at which the emission quantum yield of the composition was maximized was irradiated as the excitation light. The results are indicated in Table 1.

### (3) Evaluation of amount of elemental hydrogen and water solubility

The amount of elemental hydrogen was identified by performing an elemental analysis of the obtained carbon quantum dot by organic elemental analysis. Furthermore, the obtained carbon quantum dots and water were mixed in a manner that the concentration of the carbon quantum dots became 0.1 mass%. Then, it was visually checked whether the aqueous solution became clear or not. A case where no sediment was present was determined as being soluble in water, and a case where sediments were present was determined as insoluble in water. The results are indicated in Table 1.

### [Example 2]

Organic compounds (0.03 g of phloroglucinol dihydrate and 0.02 g of dicyandiamide) and 0.096 g of a boron compound (boric acid) were mixed by the same method as in Example 1, and thus a mixture was prepared. The mixture was heated in the same manner as in Example 1, and thus solid-state carbon quantum dots were prepared. The solid-state emission properties were evaluated for the obtained carbon quantum dots in the same manner as in Example 1. The amount of elemental hydrogen was also determined. The results are indicated in Table 1.

### [Example 3]

Organic compounds (0.03 g of phloroglucinol dihydrate and 0.06 g of melamine) and 0.144 g of a boron compound (phenylboronic acid) were mixed by the same method as in Example 1, and thus a mixture was prepared. The mixture was heated in the same manner as in Example 1, and thus solid-state carbon quantum dots were prepared. The solid-state emission properties were evaluated for the obtained carbon quantum dots in the same manner as in Example 1. Furthermore, determination of the amount of elemental hydrogen and evaluation of water solubility were performed. The results are indicated in Table 1.

### [Example 4]

Organic compounds (0.03 g of phloroglucinol dihydrate and 0.06 g of melamine) and 0.048 g of a boron compound (phenylboronic acid) were mixed by the same method as in Example 1, and thus a mixture was prepared. The mixture was heated in the same manner as in Example 1, and thus solid-state carbon quantum dots were prepared. The solid-state emission properties were evaluated for the obtained carbon quantum dots in the same manner as in Example 1. The amount of elemental hydrogen was also determined. The results are indicated in Table 1.

### [Example 5]

Organic compounds (0.03 g of phloroglucinol dihydrate and 0.06 g of melamine) and 0.024 g of a boron compound (phenylboronic acid) were mixed by the same method as in Example 1, and thus a mixture was prepared. The mixture was heated in the same manner as in Example 1, and thus solid-state carbon quantum dots were prepared. The solid-state emission properties were evaluated for the obtained carbon quantum dots in the same manner as in Example 1. The amount of elemental hydrogen was also determined. The results are indicated in Table 1.

### [Example 6]

While being ground in a mortar, 0.02 g of an organic compound A (dicyandiamide) and 0.144 g of a boron compound (boric acid) were mixed. These were placed in a screw-top test tube with an internal volume of 15 mL, then 0.03 g of an organic compound B (ethylene glycol) was added thereto and mixed by a glass rod, and thus a paste-like mixture was prepared. The mixture was heated in the same manner as in Example 1, and thus solid-state carbon quantum dots were prepared. The solid-state emission properties were evaluated for the obtained carbon quantum dots in the same manner as in Example 1. The amount of elemental hydrogen was also determined. The results are indicated in Table 1.

### [Example 7]

Organic compounds (0.09 g of citric acid and 0.06 g of melamine) and 0.048 g of a boron compound (phenylboronic acid) were mixed by the same method as in Example 1, and thus a mixture was prepared. The mixture was heated in the same manner as in Example 1, and thus solid-state carbon quantum dots were prepared. The solid-state emission properties were evaluated for the obtained carbon quantum dots in the same manner as in Example 1. The amount of elemental hydrogen was also determined. The results are indicated in Table 1.

### [Example 8]

Organic compounds (0.03 g of citric acid, 0.02 g of dicyandiamide, and 0.02 g of sulfanilic acid) and 0.144 g of a boron compound (boric acid) were mixed by the same method as in Example 1, and thus a mixture was prepared. The mixture was heated in the same manner as in Example 1, and thus solid-state carbon quantum dots were prepared. The solid-state emission properties were evaluated for the obtained carbon quantum dots in the same manner as in Example 1. The amount of elemental hydrogen was also determined. The results are indicated in Table 1.

### [Example 9]

Organic compounds (0.04 g of citric acid and 0.02 g of dicyandiamide) and 0.036 g of a boron compound (boric acid) were mixed by the same method as in Example 1, and thus a mixture was prepared. The mixture was heated in the same manner as in Example 1, and thus solid-state carbon quantum dots were prepared. The solid-state emission properties were evaluated for the obtained carbon quantum dots in the same manner as in Example 1. The amount of elemental hydrogen was also determined. The results are indicated in Table 1.

### [Example 10]

Organic compounds (0.03 g of citric acid and 0.03 g of urea) and 0.144 g of a boron compound (boric acid) were mixed by the same method as in Example 1, and thus a mixture was prepared. The mixture was heated in the same manner as in Example 1, and thus solid-state carbon quantum dots were prepared. The solid-state emission properties were evaluated for the obtained carbon quantum dots in the same manner as in Example 1. The amount of elemental hydrogen was also determined. The results are indicated in Table 1.

### [Comparative Example 1]

### (1) Preparation of solution containing carbon quantum dot

Organic compounds (0.011 g of citric acid and 0.0073 g of dicyandiamide) and 0.053 g of a boron compound (boric acid) were dissolved in 20 mL of a solvent (ion-exchanged water), and thus an aqueous solution having a concentration of approximately 0.05 mol/L was prepared. The aqueous solution was placed in an airtight container made of polytetrafluoroethylene and having a volume of 100 mL and subjected to fixed-volume heating by using RDV-TMS-100 (available from SAN-AI Kagaku Co., Ltd.), a hydrothermal reactor with a magnetic stirrer, at 200°C for 8 hours, and thus an aqueous solution containing the carbon quantum dots was made.

### (2) Evaluation of solution emission properties

The aqueous solution was placed in a cell for spectrometry, the cell being made of quartz glass. The emission wavelength (fluorescence wavelength) and emission quantum yield of the measurement sample in a solution state were evaluated using a spectrofluorometer FP-8500 (available from JASCO Corporation) equipped with an integrating sphere unit ILF-835. Light with a wavelength at which the emission quantum yield of the composition was maximized was irradiated as the excitation light. The results are indicated in Table 1.

### [Comparative Example 2]

An aqueous solution containing the carbon quantum dots was prepared using the same raw materials and method described in Comparative Example 1. The aqueous solution was evaporated to dryness, and thus solid-state carbon quantum dots were obtained. The solid-state emission properties were evaluated for the obtained carbon quantum dots in the same manner as in Example 1. The results are indicated in Table 1.

### [Comparative Example 3]

Organic compounds (0.03 g of phloroglucinol dihydrate and 0.06 g of melamine) and 0.024 g of a boron compound (phenylboronic acid) were dissolved in 20 mL of a solvent (ion-exchanged water), and thus an aqueous solution having a concentration of approximately 0.05 mol/L was prepared. The aqueous solution was heated by the same method as in Comparative Example 1, and thus an aqueous solution containing the carbon quantum dots was prepared. The emission properties of the prepared aqueous solution were evaluated in the same manner as in Comparative Example 1. The results are indicated in Table 1.

### [Comparative Example 4]

An aqueous solution containing the carbon quantum dots was prepared using the same raw materials and method described in Comparative Example 3. The aqueous solution was evaporated to dryness, and thus solid-state carbon quantum dots were obtained. The solid-state emission properties were evaluated for the obtained carbon quantum dots in the same manner as in Example 1. The results are indicated in Table 1.

### [Comparative Example 5]

Organic compounds (0.044 g of citric acid and 0.029 g of dicyandiamide) and 0.21 g of a boron compound (boric acid) were dissolved in 10 mL of a solvent (ethanol), and thus an ethanol solution having a concentration of approximately 0.4 mol/L was prepared. By using a similar hydrothermal reactor as in Comparative Example 1, the ethanol solution was subjected to fixed-volume heating at 200°C for 9 hours, and thus an ethanol solution containing the carbon quantum dots was prepared. The emission properties of the prepared ethanol solution were evaluated in the same manner as in Comparative Example 1. The results are indicated in Table 1.

### [Comparative Example 6]

An ethanol solution containing the carbon quantum dots was prepared using the same raw materials and method described in Comparative Example 5. The ethanol solution was evaporated to dryness, and thus solid-state carbon quantum dots were obtained. The solid-state emission properties were evaluated for the obtained carbon quantum dots in the same manner as in Example 1. The results are indicated in Table 1.

### [Comparative Example 7]

Organic compounds (0.132 g of phloroglucinol dihydrate and 0.264 g of melamine) and 0.105 g of a boron compound (phenylboronic acid) were dissolved in 10 mL of a solvent (ethanol), and thus an ethanol solution having a concentration of approximately 0.4 mol/L was prepared. The ethanol solution was heated by the method described in Comparative Example 5, and thus an ethanol solution containing the carbon quantum dots was prepared. The emission properties of the prepared ethanol solution were evaluated in the same manner as in Comparative Example 1. The results are indicated in Table 1.

### [Comparative Example 8]

An ethanol solution containing the carbon quantum dots was prepared using the same raw materials and method described in Comparative Example 7. The ethanol solution was evaporated to dryness, and thus solid-state carbon quantum dots were obtained. The emission properties of the obtained solid were evaluated in the same manner as in Example 1. The results are indicated in Table 1.

### [Comparative Example 9]

Organic compounds (0.15 g of citric acid and 0.10 g of dicyandiamide) and 0.048 g of a boron compound (boric acid) were mixed, and thus a mixture was prepared. The mixture was heated by the method described in Example 1, and thus solid-state carbon quantum dots were synthesized. The solid-state emission properties were evaluated for the obtained carbon quantum dots in the same manner as in Example 1. The results are indicated in Table 2.

### [Comparative Example 10]

Organic compounds (0.15 g of citric acid and 0.10 g of dicyandiamide) and 0.039 g of a boron compound (sodium tetraborate) were mixed, and thus a mixture was prepared. The mixture was heated by the method described in Example 1, and thus solid-state carbon quantum dots were synthesized. The solid-state emission properties were evaluated for the obtained carbon quantum dots in the same manner as in Example 1. The results are indicated in Table 2.

### [Comparative Example 11]

A mixture was prepared by mixing 0.15 g of an organic compound (L-cysteine hydrochloride monohydrate) and 0.055 g of a boron compound (boric acid). The mixture was heated by the method described in Example 1, and thus solid-state carbon quantum dots were synthesized. The solid-state emission properties were evaluated for the obtained carbon quantum dots in the same manner as in Example 1. The results are indicated in Table 2.

### [Comparative Example 12]

Organic compounds (0.03 g of citric acid and 0.02 g of thiourea) and 0.144 g of a boron compound (boric acid) were mixed, and thus a mixture was prepared. The mixture was heated by the method described in Example 1, and thus solid-state carbon quantum dots were synthesized. The solid-state emission properties were evaluated for the obtained carbon quantum dots in the same manner as in Example 1. The results are indicated in Table 2.

### Comparative Example 13

Organic compounds (0.09 g of phloroglucinol dihydrate and 0.02 g of dicyandiamide) and 0.096 g of a boron compound (boric acid) were mixed, and thus a mixture was prepared. The mixture was heated by the method described in Example 1 except for heating the mixture at 170°C for 3 hours, and thus solid-state carbon quantum dots were prepared. The solid-state emission properties were evaluated for the obtained carbon quantum dots in the same manner as in Example 1. The results are indicated in Table 2.

### Comparative Example 14

Organic compounds (0.03 g of phloroglucinol dihydrate and 0.06 g of m-phenylenediamine) and 0.048 g of a boron compound (phenylboronic acid) were mixed, and thus a mixture was prepared. The mixture was heated by the method described in Example 1, and thus solid-state carbon quantum dots were synthesized. The solid-state emission properties were evaluated for the obtained carbon quantum dots in the same manner as in Example 1. The results are indicated in Table 2.

### Comparative Example 15

Organic compounds (0.03 g of citric acid and 0.02 g of dicyandiamide) and 0.144 g of a boron compound (boric acid) were mixed by the same method as in Example 1, and thus a mixture was prepared. The mixture was placed in a quartz test tube having an internal volume of 25 mL and heated at 500°C for 1.5 hours in the air, and thus solid-state carbon quantum dots were synthesized. The solid-state emission properties were evaluated for the obtained carbon quantum dots in the same manner as in Example 1. Furthermore, the amount of elemental hydrogen was determined, and the water solubility was evaluated. The results are indicated in Table 2.

### Comparative Example 16

Organic compounds (0.03 g of phloroglucinol dihydrate and 0.06 g of melamine) and 0.144 g of a boron compound (phenylboronic acid) were mixed by the same method as in Example 1, and thus a mixture was prepared. The mixture was placed in a quartz test tube having an internal volume of 25 mL and heated at 500°C for 1.5 hours in the air, and thus solid-state carbon quantum dots were synthesized. The solid-state emission properties were evaluated for the obtained carbon quantum dots in the same manner as in Example 1. Furthermore, the amount of elemental hydrogen was determined, and the water solubility was evaluated. The results are indicated in Table 2.

**[Table 1]**

| | | Organic compound | | Boron compound | | Presence of solvent during heating | Heating temperature [°C] | Property during measurement | Excitation wavelength/ emission wavelength [nm] | Emission quantum yield | Amount of elemental hydrogen [mass%] | Water solubility |
|---|---|---|---|---|---|---|---|---|---|---|---|---|
| | | Type | Amount of nitrogen atom in organic compound [mass%] | Type | ^{*1} Amount of boron compound [mass%] | | | | | | | |
| | 1 | Citric acid 0.03 g + dicvandiamide 0.02 g | 27 | Boric acid 0.144 g | 74 | No | 170 | Powder | 420/460 | 78% | 2.10 | Soluble |
| | 2 | Phloroglucinol dihydrate 0.03 g + dicyandiamide 0.02 q | 27 | Boric acid 0.096 g | 66 | No | 170 | Powder | 520/555 | 55% | 2.10 | Unevaluatec |
| | 3 | Phloroglucinol dihydrate 0.03 g + melamine 0.06 g | 44 | rhenylboronic acid 0.144 g | 62 | No | 170 | Powder | 580/600 | 61% | 4.64 | Soluble |
| | 4 | Phloroglucinol dihydrate 0.03 g + melamine 0.06 g | 44 | rhenylboronic acid 0.048 g | 35 | No | 170 | Powder | 600/610 | 75% | 4.38 | Unevaluatec |
| Examples | 5 | Phloroglucinol dihydrate 0.03 g + melamine 0.06 g | 44 | rhenylboronic acid 0.024 g | 21 | No | 170 | Powder | 600/610 | 74% | 4.30 | Unevaluatec |
| | 6 | Ethylene glycol 0.03 g + dicvandiamide 0.02 g | 27 | Boric acid 0.144 g | 74 | No | 170 | Powder | 400/450 | 70% | 5.08 | Unevaluatec |
| | 7 | Citric acid 0.09 g + melamine 0.06 g | 27 | rhenylboronic acid 0.048 g | 24 | No | 170 | Powder | 500/560 | 40% | 3.70 | Unevaluatec |
| | 8 | Citric acid 0.03 g + dicyandiamide 0.02 g + sulfanilic acid 0.02 g | 21 | Boric acid 0.144 g | 67 | No | 170 | Powder | 380/440 | 55% | 2.99 | Unevaluatec |
| | 9 | Citric acid 0.04 g + dicvandiamide 0.02 g | 22 | Boric acid 0.036 q | 38 | No | 170 | Powder | 420/470 | 62% | 3.07 | Unevaluatec |
| | 10 | Citric acid 0.03 g + urea 0.03 q | 23 | Boric acid 0.144 g | 71 | No | 170 | Powder | 380/455 | 79% | 2.77 | Unevaluatec |
| | 1 | Citric acid 0.011 g + dicvandiamide 0.0073 g | 27 | Boric acid 0.053 g | 74 | Yes | 200 | Aqueous solution | 400/476 | 3.4 % | Not measured | Unevaluatec |
| | 2 | Citric acid 0.011 g + dicvandiamide 0.0073 g | 27 | Boric acid 0.053 g | 74 | Yes | 200 | Powder | No emission | - | Not measured | Unevaluatec |
| | 3 | Phloroglucinol dihydrate 0.03 g + melamine 0.06 g | 44 | rhenylboronic acid 0.024 g | 21 | Yes | 200 | Aqueous solution | No emission | - | Not measured | Unevaluatec |
| Comparative Examples | 4 | Phloroglucinol dihydrate 0.03 g + melamine 0.06 g | 44 | rhenylboronic acid 0.024 g | 21 | Yes | 200 | Powder | No emission | - | Not measured | Unevaluatec |
| | 5 | Citric acid 0.044 g + dicvandiamide 0.029 q | 26 | Boric acid 0.21 g | 74 | Yes | 200 | Ethanol solution | 540/593 | 19% | Not measured | Unevaluatec |
| | 6 | Citric acid 0.044 g + dicvandiamide 0.029 g | 26 | Boric acid 0.21 g | 74 | Yes | 200 | Powder | 540/No maximum | 1.3% | Not measured | Unevaluatec |
| | 7 | Phloroglucinol dihydrate 0.132 g + melamine 0.264 g | 44 | rhenylboronic acid 0.105 g | 21 | Yes | 200 | Ethanol solution | 460/488 | 1.2% | Not measured | Unevaluatec |
| | 8 | Phloroglucinol dihydrate 0.132 g + melamine 0.264 g | 44 | rhenylboronic acid 0.105 g | 21 | Yes | 170 | Powder | No emission | - | Not measured | Unevaluatec |

| | | | | | | | | | | | | |
|---|---|---|---|---|---|---|---|---|---|---|---|---|
| *1 Amount of boron compound with respect to total amount of organic compound and boron compound | | | | | | | | | | | | |

**[Table 2]**

| | | Organic compound | | Boron compound | | Presence of solvent during heating | Heating temperature [°C] | Property during measurement | Excitation wavelength/ emission wavelength [nm] | Emission quantum yield | Amount of elemental hydrogen [mass%] | Water solubility |
|---|---|---|---|---|---|---|---|---|---|---|---|---|
| | | Type | Amount of nitrogen atom in organic compound [mass%] | Type | ^{*1} Amount of boron compounc [mass%] | | | | | | | |
| Comparative Examples | 9 | Citric acid 0.15 g + dicyandiamide 0.10 g | 27 | Boric acid 0.048 g | 16 | No | 170 | Powder | 480/561 | 2.0% | Not measured | Unevaluated |
| | 10 | Citric acid 0.15 g + dicyandiamide 0.10 g | 27 | Sodium tetraborate 0.039 g | 13 | No | 170 | Powder | 500/578 | 1.0% | Not measured | Unevaluated |
| | 11 | L-cysteine hydrochloride monohydrate 0.15 g | 8 | Boric acid 0.055 g | 27 | No | 170 | Powder | 500/577 | 2.0% | Not measured | Unevaluated |
| | 12 | Citric acid 0.03 g + thiourea 0.02 g | 15 | Boric acid 0.144 g | 74 | No | 170 | Powder | 400/480 | 19% | Not measured | Unevaluated |
| | 13 | Phloroglucinol dihydrate 0.09 g + dicyandiamide 0.02 g | 12 | Boric acid 0.096 g | 47 | No | 170 | Powder | 580/605 | 14% | Not measured | Unevaluated |
| | 14 | Phloroglucinol dihydrate 0.03 g + m-phenylenediamine 0.06 g | 17 | Phenylboronic acid 0.048 g | 35 | No | 170 | Powder | 580/605 | 70% | Not measured | Unevaluated |
| | 15 | Citric acid 0.03 g + dicyandiamide 0.02 g | 27 | Boric acid 0.144 g | 74 | No | 500 | Powder | No emission | - | <0.5 | Insoluble |
| | 16 | Phloroglucinol dihydrate 0.03 g + melamine 0.06 g | 44 | Phenylboronic acid 0.144 g | 62 | No | 500 | Powder | No emission | - | 1.30 | Insoluble |

| | | | | | | | | | | | | |
|---|---|---|---|---|---|---|---|---|---|---|---|---|
| *1 Amount of boron compound with respect to total amount of organic compound and boron compound | | | | | | | | | | | | |

In the production methods of Examples 1 to 10, solid-state carbon quantum dots were obtained through simple processes including preparation of a mixture and heating, without use of a solvent. On the other hand, in the production methods of Comparative Examples 2, 4, 6, and 8, solid-state carbon quantum dots were obtained through multi-step processes including synthesis by a solvothermal method and drying. More specifically, in the production methods of Examples 1 to 10, the operation was completed mainly by preparation of a mixture and heating at 100°C or higher and 300°C or lower for 1.5 hours; however, the production methods of Comparative Examples 2, 4, 6, and 8 required heating for 8 hours or longer and subsequent solvent removal. Therefore, it can be said that the production methods of Examples 1 to 10 exhibited excellent time efficiency. In addition, the time for the heating in Examples 1 to 10 was shorter than the time for the heating in Comparative Examples 1 to 8, and heat capacity of the heating target was also made smaller because a solvent was not necessary. Therefore, the input energy at the time of carbon quantum dot preparation was made smaller.

Furthermore, when Comparative Example 1 and Comparative Example 2, Comparative Example 5 and Comparative Example 6, and Comparative Example 7 and Comparative Example 8 are compared, emission quantum yield decreased due to the drying of the solution containing the carbon quantum dots. It is conceived that this is because carbon quantum dots aggregated as being dried and quenching occurred. Meanwhile, because each of the production methods of Examples 1 to 10 did not include drying, quenching due to aggregation of the carbon quantum dots was less likely to occur, and the high emission quantum yield was achieved in a solid state.

Furthermore, FIG. 1 is a graph indicating the relationship of the amount of nitrogen atoms in the organic compound used in each of Examples 1 to 10 and Comparative Examples 9 to 14, the amount of the boron compound with respect to the total amount of the organic compound and the boron compound, and the emission quantum yield. In the graph, the amount of nitrogen atoms in the organic compound is indicated in the horizontal axis, and the amount of the boron compound with respect to the total amount of the organic compound and the boron compound is indicated in the vertical axis. Furthermore, a case where the emission quantum yield was 30% or greater was indicated by **●**, and a case where the emission quantum yield was less than 30% was indicated by ×. As indicated in FIG. 1 and Table 2, even when the mixture containing the organic compound and the boron compound was heated with substantially no solvent, in cases where the amount of the boron compound with respect to the total amount of the organic compound and the boron compound was less than 20 mass% (Comparative Examples 9 and 10), the emission quantum yield was not adequately increased. Furthermore, even when the mixture containing the organic compound and the boron compound was heated with substantially no solvent, in cases where the amount of nitrogen atoms in the organic compound was less than 20 mass% (Comparative Examples 11 to 14), the emission quantum yield was not increased. That is, it is clear that, only when the amount of nitrogen atoms in the organic compound was 20 mass% or greater and the amount of the boron compound with respect to the total amount of the organic compound and the boron compound was 20 mass% or greater, the carbon quantum dots having the emission quantum yield of 30% or greater were obtained.

Furthermore, as indicated in Table 1, when the heating was performed at 100°C or higher and 300°C or lower as in Example 1 and Example 3, the amount of elemental hydrogen in the obtained carbon quantum dots became 2.0 mass% or greater, and dissolution in water was possible. Note that, when the aqueous solution each prepared in Example 1 and Example 3 was irradiated with a light having a wavelength of 365 nm, it was confirmed that the aqueous solution yielded a fluorescence. Meanwhile, when the heating was performed at 500°C as in Comparative Examples 15 and 16, the amount of elemental hydrogen in the obtained carbon quantum dots became less than 2.0 mass%, and dissolution in water was not possible. Furthermore, when the aqueous solution in which the carbon quantum dots were added was irradiated with a light having a wavelength of 365 nm, fluorescence was not confirmed.

The present application claims priority from the Japanese patent application No. 2021-050399 filed on March 24, 2021. The contents described in the specification and drawing of this priority application are all incorporated in the specification of the present application by reference.

### INDUSTRIAL APPLICABILITY

According to the method for producing carbon quantum dots of an embodiment of the present invention, the carbon quantum dots having high emission quantum yield and being solid at 25°C under 1 atm can be prepared through simple processes. The carbon quantum dots produced by the method can be applied in various products such as various lighting materials and thermoelectric materials.

## Claims

1. A method for producing carbon quantum dots, the carbon quantum dots being solid at 25°C under 1 atm, the method comprising:
preparing a mixture by mixing an organic compound and a boron compound, the organic compound having a reactive group and not containing a boron atom; and
preparing carbon quantum dots by heating the mixture with substantially no solvent at 100°C or higher and 300°C or lower,
wherein an amount of a nitrogen atom in the organic compound is 20 mass% or greater; and
an amount of the boron compound with respect to a total amount of the organic compound and the boron compound is 20 mass% or greater.

2. The method for producing carbon quantum dots according to claim 1, wherein
a maximum emission wavelength of the carbon quantum dots is 440 nm or higher and 700 nm or lower, and an emission quantum yield is 30% or greater.

3. The method for producing carbon quantum dots according to claim 1 or 2, wherein the organic compound comprises a nitrogen-containing organic compound and a nitrogen-free organic compound, the nitrogen-containing organic compound containing a nitrogen atom in a molecule, and the nitrogen-free organic compound containing no nitrogen atom in a molecule.

4. The method for producing carbon quantum dots according to claim 3, wherein the nitrogen-containing organic compound is an amine compound.
